# DEMANDE DE BREVET EUROPEEN

(11) **EP 0 857 904 A1**
(43) Date de publication de la demande: **12.08.1998**
(21) Numéro de dépôt: 98200200.8
(22) Date de dépôt: 26.01.1998
(51) Int. Cl.: F16K 31/50, F16K 1/30

(54) **Robinet à gaz**

(30) Priorité: 31.01.1997 LU 90017
(71) Demandeur: LUXEMBOURG PATENT COMPANY S.A., 1720 Luxembourg (LU)
(72) Inventeur: Schmitz, Jean-Claude, 7340 Heisdorf (LU); Kerger, Léon, 7382 Helmdange (LU)
(74) Mandataire: Meyers, Ernest

(57) **Abrégé**

Le robinet comporte un élément de manoeuvre extérieur (36) et une tige de liaison (22) pour transmettre le mouvement de l'élément de manoeuvre (36) à l'organe d'ouverture et de fermeture (24) qui est disposé de manière à être maintenu sur le siège d'étanchéité (26) sous l'effet de la pression du gaz. Pour faciliter l'ouverture contre la pression du gaz l'élément de manoeuvre (36) comporte une douille cylindrique (3() pourvue d'un premier filetage imposant à la douille (38) un mouvement axial lors de la rotation de l'élément de manoeuvre (36) et un second filetage de sens contraire au premier filetage et avec un pas de vis différent pour modifier l'effet engendré par le premier filetage.

## Description

La présente invention concerne un robinet à gaz comprenant un corps avec un organe d'ouverture et de fermeture intérieur coopérant avec un siège d'étanchéité, un élément de manoeuvre extérieur et une tige de liaison pour transmettre le mouvement de l'élément de manoeuvre à l'organe d'ouverture et de fermeture.

L'invention vise plus particulièrement des robinets qui doivent répondre aux critères de sécurité les plus sévères et qui doivent être facilement maniables tels que, par exemple, des robinets pour bouteilles à gaz utilisés dans le domaine hospitalier. Pour des raisons de sécurité, il est souhaitable que l'organe de fermeture de ces robinets soit disposé de manière à être sollicité par la pression du gaz dans le sens de la fermeture. Ceci signifie toutefois que, pour ouvrir le robinet, il faut vaincre la force exercée par la pression du gaz sur l'organe de fermeture. La force requise pour l'ouverture du robinet peut ainsi devenir très importante lorsque la pression du gaz dans la bouteille est élevée. Autrement dit, la facilité de manoeuvre et les règles de sécurité très strictes ne sont pas toujours des critères facilement conciliables.

Le but de la présente invention est de prévoir un nouveau robinet à gaz, notamment pour bouteille à pression élevée, qui est facilement maniable et qui répond aux critères de sécurité les plus stricts.

Pour atteindre cet objectif, l'invention propose un robinet du genre décrit ci-dessus qui est caractérisé en ce que l'organe d'ouverture et de fermeture est disposé de manière à être maintenu sur le siège d'étanchéité sous l'effet de la pression du gaz, en ce que l'élément de manoeuvre comporte une douille cylindrique pourvue d'un premier filetage imposant à la douille un mouvement axial lors de la rotation de l'élément de manoeuvre et en ce qu'il est prévu un second filetage de sens contraire au premier filetage et avec un pas de vis différent pour modifier l'effet engendré par le premier filetage.

Selon un mode de réalisation avantageux, la douille cylindrique est pourvue d'un filetage extérieur coopérant avec un filetage intérieur correspondant du corps du robinet et d'un filetage intérieur coopérant avec un filetage extérieur correspondant d'un piston cylindrique auquel est reliée la partie supérieure de la tige de liaison, le filetage intérieur et le filetage extérieur de la douille cylindrique étant de sens contraire avec des pas de vis différents.

Le pas de vis du filetage intérieur est, de préférence, inférieur à celui du filetage extérieur.

Selon un autre aspect de l'invention, le corps du robinet présente à la base dudit filetage intérieur correspondant un épaulement annulaire avec un joint d'étanchéité entre le corps et la base de ladite douille cylindrique lorsque celle-ci se trouve en position d'ouverture maximale.

La tige de liaison traverse dans sa partie supérieure un presse-étoupe et possède avantageusement au-dessus de celui-ci une section réduite formant un point de rupture de sécurité.

La partie inférieure de la tige de liaison traverse un canal de sortie des gaz et son extrémité inférieure porte l'organe de fermeture qui coopère avec un siège annulaire entourant l'extrémité inférieure dudit canal de sortie.

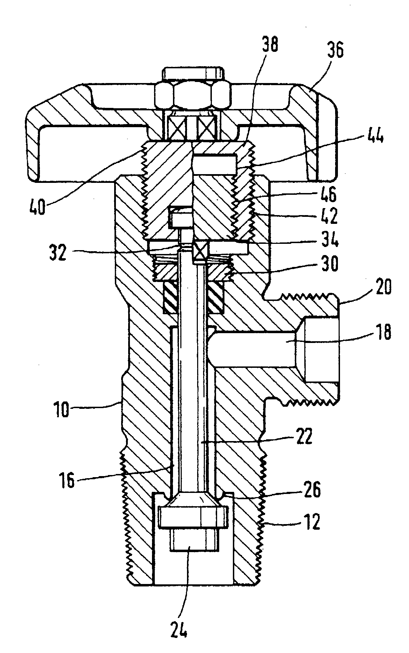

D'autres particularités et caractéristiques de l'invention ressortiront de la description détaillée d'un mode de réalisation avantageux présenté ci-dessous, à titre d'illustration, en référence à la figure annexée qui représente une coupe verticale à travers un robinet selon la présente invention.

Le robinet représenté sur la figure comporte un corps 10, par exemple métallique, dont la partie inférieure est dotée d'un filet 12 lui permettant d'être vissé sur une bouteille à gaz non représentée. Le corps 10 est traversé par un canal axial 16 en communication avec un canal de sortie radial 18 traversant un raccord 20 sur lequel peut être branché un circuit d'utilisation non montré.

Le canal axial 16 est traversé par une tige 22 dont l'extrémité inférieure porte un organe de fermeture 24 qui coopère avec un siège 26 entourant l'extrémité inférieure du canal 16. Étant donné que le siège 26 est disposé au-dessus de l'organe de fermeture 24, celui-ci est sollicité par la pression du gaz sur le siège 26. Ainsi, lorsqu'en cas d'accident, le robinet se brise au-dessus de la bouteille, il n'y a pas de fuite de gaz.

La partie supérieure de la tige 22 traverse un presse-étoupe 30 qui assure l'étanchéité vers l'extérieur lorsque le robinet est ouvert. Selon une autre particularité, la tige possède au-dessus du presse-étoupe 30 une section réduite 32 qui forme un point de rupture de sécurité. De cette manière, si la tige devait casser pour une raison ou l'autre, la rupture se produirait toujours à cet endroit, c'est-à-dire au-dessus du presse-étoupe 30 qui continue à assurer l'étanchéité.

La tête de la tige 22 est reliée à un piston cylindrique 34. Cette liaison peut, par exemple, être assurée par une tête en forme de champignon de la tige 22 qui est engagée dans un logement de forme complémentaire à la base du piston 34.

Le robinet est actionné au moyen d'un volant de manoeuvre 36 qui comporte ou est vissé sur une douille cylindrique 38. Cette douille 38 comporte un filetage extérieur 40 qui coopère avec une filetage intérieur correspondant 42 de la partie supérieure du corps 10 du robinet. Une rotation du volant provoque ainsi une translation verticale de la douille 38.

La douille 38 comporte également un filetage intérieur 44 qui coopère avec une filetage extérieur correspondant 46 du piston 34 qui, de ce fait, subit une translation axiale sous l'effet de la rotation et de la translation de la douille 38. La particularité est que les jeux de filets extérieurs 40 et 42 et intérieurs 44 et 46 sont de sens contraire, provoquant ainsi un effet différentiel des mouvements axiaux de la douille 38 et du piston 34. Si le pas de vis des filetages intérieurs 44, 46 est inférieur au pas de vis des filetages extérieurs 40, 42, une descente de la douille 38 sous l'effet de la rotation du volant 36 dans le sens de l'ouverture du robinet provoque une montée du piston 34, mais, vu que son pas de vis est inférieur au pas de vis extérieur, le mouvement de descente l'emporte, son amplitude imposée par le pas de vis extérieur étant toutefois réduite par le pas de vis intérieur. Par un choix approprié des pas de vis, on peut ainsi démultiplier à volonté la force nécessaire pour manoeuvrer le volant en vue de l'ouverture du robinet contre la pression du gaz. En revanche, plus la démultiplication est grande, plus il faudra tourner au volant.

Il est également possible que le pas de vis des filetages intérieurs 44, 46 soit supérieur à ceux des filetages extérieurs 40, 42. Dans ce cas, l'arrangement doit être tel qu'une rotation du volant 36 en vue de l'ouverture du robinet soulève la douille 38 et fasse descendre le piston 34, autrement dit que l'effet des filetages extérieurs 40, 42 diminue l'effet des filetages intérieurs 44, 46.

La première alternative selon laquelle la douille 38 doit descendre lors de l'ouverture mérite toutefois la préférence car, comme contribution à la sécurité, le corps 10 du robinet présente, à la base du filetage 42, un épaulement sur lequel peut être disposé un joint, par exemple une rondelle en nylon, qui assure l'étanchéité entre le corps 10 et la douille 38 lorsque le robinet est complètement ouvert.

Le mode de réalisation montré sur la figure et décrit ci-dessus n'est qu'un exemple de mise en oeuvre de l'invention. De nombreuses variantes sont possibles, l'essentiel étant qu'il y ait deux filetages différentiels de manière que l'un modifie l'effet de l'autre. Ainsi, par exemple, il est possible de concevoir la douille 38 avec un filet intérieur qui coopère avec un filet extérieur sur le corps du robinet. La douille comporterait alors un cylindre s'étendant axialement dans le corps et pourvu d'un filetage intérieur avec lequel coopère un filetage extérieur du piston.

Il est également possible que la douille 38 soit solidaire de la tige 22. Dans ce cas, le jeu de filets 44 et 46 serait transféré entre l'extrémité inférieure de la tige 22 et l'organe de fermeture 24. Celui-ci devrait alors avoir un contour approprié pour empêcher sa rotation lors de la rotation de la tige 22 et permettre son mouvement axial par rapport au siège 26.

L'invention n'est pas non plus limitée à des robinets pour bouteilles à gaz. Elle peut également être appliquée à des robinets de passage.

## Revendications

1. Robinet à gaz comprenant un corps (10) avec un organe d'ouverture et de fermeture intérieur (24) coopérant avec un siège d'étanchéité (26), un élément de manoeuvre extérieur (36) et une tige de liaison (22) pour transmettre le mouvement de l'élément de manoeuvre (36) à l'organe d'ouverture et de fermeture (24), caractérisé en ce que l'organe d'ouverture et de fermeture (24) est disposé de manière à être maintenu sur le siège d'étanchéité (26) sous l'effet de la pression du gaz, en ce que l'élément de manoeuvre comporte une douille cylindrique (38) pourvue d'un premier filetage imposant à la douille (38) un mouvement axial lors de la rotation de l'élément de manoeuvre (36) et en ce qu'il est prévu un second filetage de sens contraire au premier filetage et avec un pas de vis différent pour modifier l'effet engendré par le premier filetage.

2. Robinet selon la revendication 1, caractérisé en ce que la douille cylindrique (328) est pourvue d'un filetage extérieur (40) coopérant avec un filetage intérieur correspondant (42) du corps (10) du robinet et d'un filetage intérieur (44) coopérant avec une filetage extérieur correspondant (46) d'un piston cylindrique (34) auquel est reliée la partie supérieure de la tige de liaison (22) et en ce que le filetage intérieur (44) et le filetage extérieur (40) de la douille cylindrique (38) sont de sens contraire et ont des pas de vis différents.

3. Robinet selon la revendication 2, caractérisé en ce que le pas de vis du filetage intérieur (44) de la douille (38) est inférieur à celui de son filetage extérieur (40).

4. Robinet selon la revendication 2, caractérisé en ce que le pas de vis du filetage intérieur (44) de la douille (38) est supérieur à celui de son filetage extérieur (40).

5. Robinet selon l'une quelconque des revendications 1 à 3, caractérisé en ce que le corps du robinet présente, à la base dudit filetage intérieur correspondant (42), un épaulement annulaire avec un joint d'étanchéité entre le corps (10) et la base de la douille cylindrique (38) lorsque celle-ci se trouve en position d'ouverture maximale.

6. Robinet selon l'une quelconque des revendications 1 à 5, caractérisé en ce que la tige de liaison (22) traverse, dans sa partie supérieure, un presse-étoupe (30) et possède, au-dessus de celui-ci, une section réduite (32) formant un point de rupture de sécurité.
